# EUROPEAN PATENT APPLICATION

(11) **EP 4 691 726 A1**
(43) Date of publication of application: **11.02.2026**
(21) Application number: 23931935.3
(22) Date of filing: 03.04.2023
(51) Int. Cl.: B29C 44/00, B29C 44/58

(54) **MOLDED BODY, AUTOMOTIVE COMPONENT, AND METHOD FOR PRODUCING MOLDED BODY**

(71) Applicant: Resonac Corporation, Tokyo 105-7325 (JP)
(72) Inventor: YAMADA, Kouji, Tagawa-shi, Fukuoka 825-0005 (JP)
(74) Representative: Hoffmann Eitle
(86) International application number: PCT/JP2023/013863
(87) International publication number: WO 2024/209521

(57) **Abstract**

A molded body, comprising an outer surface and an inner surface, and a foamed portion that includes a foamed layer, the foamed portion having an opening that penetrates from the outer surface to the inner surface, wherein: a periphery of the opening does not include the foamed layer; or a thickness of the foamed layer at the periphery is smaller than a thickness of the foamed layer at an outer side of the periphery.

## Description

### [Technical Field]

The present disclosure relates to a molded body, an automotive component, and a method for producing a molded body.

### [Background Art]

In recent years, metal members for inner and exterior components have been replaced by resin members for the purpose of reducing the weight of automobiles. In particular, a molded body that includes cells obtained by causing a resin to foam is light in weight as compared to metal, and is expected to achieve further improvements in the fuel efficiency of automobiles.

As a foamed molded body used for automotive components, for example, a product obtained by the method described in Patent Document 1 is known. In this method, a molded body is produced by injecting a resin into a cavity created inside a pair of molds and causing the resin to foam.

### [Prior Art Document]

### [Patent Document]

Patent Document 1: Japanese Patent Application Laid-Open No. 2005-238726

### [Summary of the Invention]

### [Problem to be Solved by the Invention]

Various components may be attached to the kind of molded body as mentioned above. For example, it is possible to attach a component to the molded body by inserting a portion of the component into an opening provided at the molded body.

However, when an opening is provided at a molded body that is obtained by causing a resin to foam, the shape of the opening may be affected by the behavior of the resin because the foaming of the resin and the formation of the opening are carried out simultaneously. As a result, there is a possibility that the component will not be attached to the molded body in a precise manner.

In view of the foregoing, the present disclosure aims to provide a molded body with an excellent precision of component attachment; an automotive component including the molded body; and a method for producing the molded body.

### [Means for Solving the Problem]

The means for solving the problem includes the following embodiments.
<1> A molded body, including an outer surface and an inner surface, and a foamed portion that includes a foamed layer,
   the foamed portion having an opening that penetrates from the outer surface to the inner surface, wherein:
   a periphery of the opening does not include the foamed layer; or
   a thickness of the foamed layer at the periphery is smaller than a thickness of the foamed layer at an outer side of the periphery.
<2> The molded body according to <1>, wherein the inner surface at the periphery is parallel to the outer surface at the periphery.
<3> The molded body according to <1> or <2>, wherein an area of the opening at the outer surface is greater than an area of the opening at the inner surface.
<4> The molded body according to any one of <1> to <3>, wherein the foamed portion is in a state in which the foamed layer is disposed between a skin layer disposed at an outer surface side and a skin layer disposed at an inner surface side.
<5> An automotive component, including the molded body according to any one of <1> to <4>.
<6> A method for producing the molded body according to any one of <1> to <4>, the method including:
   a process of supplying, to a space between a mold at an outer surface side of the molded body and a mold at an inner surface side of the molded body, a composition that includes a resin and a foaming agent; and
   a process of moving the mold at the inner surface side in a direction away from the mold at the outer surface side, wherein:
      the mold at the inner surface side has a movable portion at a region that includes the opening and the periphery; and
      the movable portion is projected, as the mold at the inner surface side is moved, in an opposite direction from a direction of moving the mold at the inner surface side.

### [Effect of the Invention]

According to the present disclosure, a molded body with an excellent precision of component attachment; an automotive component including the molded body; and a method for producing the molded body are provided.

### [Brief Description of the Drawings]

FIG. 1 is a sectional view schematically illustrating an exemplary configuration of the molded body.
FIG. 2 is a sectional view schematically illustrating an exemplary configuration of the molded body.
FIG. 3 is a sectional view schematically illustrating an exemplary configuration of the molded body.
FIG. 4 is a sectional view schematically illustrating an exemplary method of producing the molded body.
FIG. 5 is a sectional view schematically illustrating an exemplary method of producing the molded body.
FIG. 6 is a sectional view schematically illustrating an exemplary method of producing the molded body.

### [Embodiments for Implementing the Invention]

Hereinafter, embodiments of the present invention will be described in detail. However, the present invention is not limited to the following embodiments. In the following embodiments, constituent elements (including element steps and the like) are not essential unless otherwise specified. Likewise, numerical values and ranges thereof are not intended to restrict the invention.

In the present disclosure, the term "process" includes not only a process that is independent of other processes, but also a process that cannot be clearly distinguished from other processes as long as the purpose of the process is achieved.

In the present disclosure, numerical ranges indicated using "to" include the numerical values before and after "to" as the minimum and maximum values, respectively.

In the numerical ranges described in stages in this disclosure, the upper or lower limit value described in one numerical range may be replaced with the upper or lower limit value of another numerical range described in stages. In addition, the upper or lower limit of the numerical ranges described in the present disclosure may be replaced with values shown in the examples. In the present disclosure, when a composition contains multiple substances corresponding to each component, the content of each component in the composition means the total content of the multiple substances present in the composition, unless otherwise specified.

In the present disclosure, the term "layer" includes, when a region where a layer is present is observed, a case in which a layer is formed at a portion of the region, in addition to a case in which a layer is formed at an entire region.

In the present disclosure, when an embodiment is described with reference to drawings, the configuration of the embodiment is not limited to the configuration shown in the drawings. The sizes of the components in each drawing are conceptual, and the relative relationships between the sizes of the components are not limited to those shown in drawings.

### <Molded Body>

The molded body of the present disclosure is a molded body, including an outer surface and an inner surface, and a foamed portion that includes a foamed layer,
the foamed portion having an opening that penetrates from the outer surface to the inner surface, wherein:
a periphery of the opening does not include the foamed layer; or
a thickness of the foamed layer at the periphery is smaller than a thickness of the foamed layer at an outer side of the periphery.

In the present disclosure, the "outer surface" refers to a surface that is at an external side when the molded body is used (for example, the viable side when the molded body is attached to an automobile), and the "inner surface" refers to a surface at an inner side when the molded body is used.

In the present disclosure, the "foamed layer" refers to a portion that is in a state in which cells are included in resin, the "foamed portion" refers to a region of the molded body in a plan view in which the foamed layer is present; and the "thickness of the formed layer" refers to a dimension of the foamed layer in a thickness direction of the molded body.

In the molded body of the present disclosure, the periphery of the opening does not include a foamed layer, or the thickness of the foamed layer at the periphery of the opening is smaller than the thickness of the foamed layer at the outer side of the periphery. Namely, a foamed layer is not formed at the periphery, or the formation of a foamed layer is suppressed as compared with an outer region of the periphery.

When the foamed layer is not formed at the periphery, or when the formation of the foamed layer is suppressed, the shape of the opening is less likely to be affected by the behavior of resin during foaming. As a result, it is possible to form an opening of a desired shape in a stable manner.

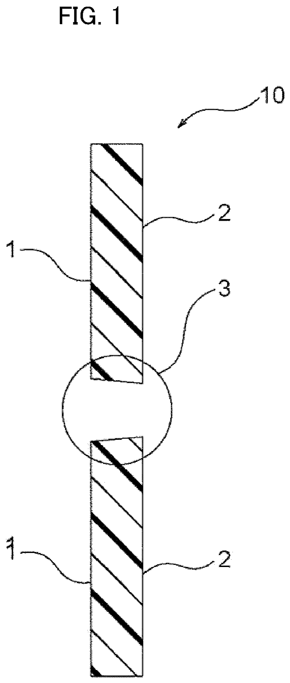

FIG. 1 is a sectional view schematically illustrating an exemplary configuration of the molded body of the present disclosure, in which the foamed layer has not been formed. For the sake of explanatory convenience, the configuration shown in FIG. 1 in which the foamed layer has not been formed is also referred to as the molded body.

The molded body 10 has an outer surface 1, an inner surface 2, and an opening 3 that penetrates from the outer surface 1 to the inner surface 2.

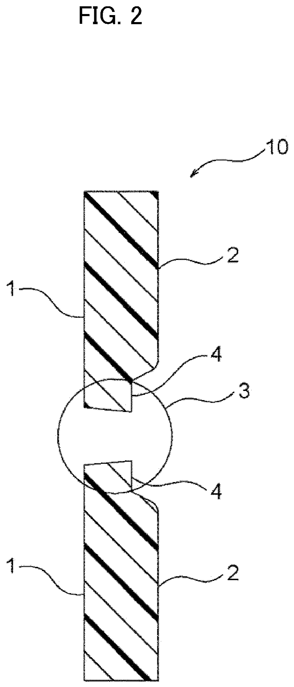

FIG. 2 is a sectional view schematically illustrating an exemplary configuration of the molded body of the present disclosure, in which the foamed layer has been formed. The molded body 10, in which the foamed layer has been formed, has a distance between the outer surface 1 and the inner surface 2 that is greater than a distance between the outer surface 1 and the inner surface 2 shown in FIG. 1. Accompanied by this increase in distance, the foamed layer is formed inside the molded body 10. Meanwhile, the distance between the outer surface 1 and the inner surface 2 at the periphery 4 of the opening 3 remains the same as the distance between the outer surface 1 and the inner surface 2 before the formation of the foamed layer. Namely, at the periphery 4 of the opening 3, the foamed layer is not formed, or the formation of the foamed layer is suppressed as the distance between the outer surface 1 and the inner surface 2 is increased.

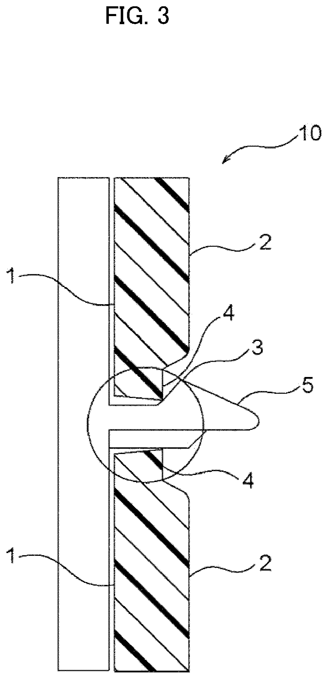

FIG. 3 is a sectional view schematically illustrating a state of the molded body 10 shown in FIG. 2 to which a component 5 is attached. In FIG. 3, the nail (projected portion) of the component 5 is inserted in the opening 3 of the molded body 10. Since the shape of the periphery 4 of the opening 3 matches the shape of the nail of the component 5, the nail is less likely to depart or deviate, and the component 5 can be attached to the molded body 10 in a precise manner.

From the viewpoint of the precision of component attachment, in the molded body of the present disclosure, it is preferred that the periphery of the opening does not include the foamed layer or the thickness of the foamed layer at the periphery is 30% or less of the thickness of the foamed layer at an outer side of the periphery of the opening; or it is more preferred that the periphery of the opening does not include the foamed layer or the thickness of the foamed layer at the periphery is 15% or less of the thickness of the foamed layer at an outer side of the periphery of the opening; or it is further preferred that the periphery of the opening does not include the foamed layer or the thickness of the foamed layer at the periphery is 5% or less of the thickness of the foamed layer at an outer side of the periphery of the opening;
In the present disclosure, the thickness of the foamed layer at an outer side of the periphery of the opening refers to a thickness of the foamed layer at a portion that externally contacts the periphery of the opening.

The cause for the formation of the foamed layer at the periphery of the opening may be, for example, behavior of the resin during foaming, inevitable movement of the mold used for producing the molded body, and the like.

From the viewpoint of the precision of component attachment, the inner surface of the molded body at the periphery of the opening is preferably parallel to the outer surface of the molded body at the periphery of the opening. The state of the inner surface at the periphery of the opening can be controlled by, for example, the shape of the mold used for producing the molded body.

From the viewpoint of the precision of component attachment, the area of the opening at the outer surface side is preferably greater than the area of the opening at the inner surface side. Namely, the opening preferably has a shape that gradually narrows from the outer surface side toward the inner surface side (i.e., tapered).

The shape of the opening viewed at the outer surface side of the molded body is not particularly limited. Specific examples of the shape of the opening include a round shape, an oval shape, a polygonal shape, and a slit shape.

The thickness at the periphery of the opening is preferably smaller than the thickness at an outer side of the periphery. When the thickness at the periphery of the opening is smaller than the thickness at an outer side of the periphery, it is easier to obtain a state in which the periphery of the opening does not include the foamed layer, or the thickness of the foamed layer at the periphery is smaller than the thickness of the foamed layer at an outer side the periphery, by way of general techniques of foam molding.

The thicknesses at the opening, the periphery or the exterior of the periphery refer to the sizes in a thickness direction of the molded body, respectively.

The thickness (an average thickness when the thickness is not uniform) of the molded body at the foamed portion is not particularly limited, and may be determined depending on the purpose of the molded body, and the like.

For example, the thickness of molded body at the foamed portion may be selected from a range of 1 mm to 6 mm. The thickness of the molded body at the foamed portion may be either uniform or not uniform.

The average thickness of the foamed region refers to an arithmetic average value of the thicknesses measured at 10 points.

The molded body may have a foamed portion and a portion that does not correspond to the foamed portion (i.e., a portion not including a foamed layer) (for example, a bend of the molded body).

When the molded body has a foamed portion and a portion that does not correspond to the foamed portion, the proportion of the foamed portion in the entire molded body is not particularly limited, and may be determined depending on the purpose of the molded body, and the like. For example, the proportion of the foamed portion in the entire molded body may be from 50% to 100%, or from 70% to 100%, or from 80% to 100%, on the basis of area when the molded body is viewed from the outer surface side,
The foamed portion of the molded body may in a state in which the foamed layer is disposed between a skin layer disposed at the outer surface side and a skin layer disposed at the inner surface side.

In the present disclosure, the skin layer refers to a layer that does not include cells that are formed when a resin is foamed.

The type of the resin included in the molded body is not particularly limited. From the viewpoint of moldability, a balance between toughness and strength, and the like, the resin included in the molded body is preferably a thermoplastic resin. The resin included in the molded body may be a single kind or a combination of two or more kinds.

Specific examples of the resin include at least one selected from the group consisting of polyethylene resin, polypropylene resin, composite polypropylene resin, polystyrene resin, polyethylene terephthalate resin, polyvinyl alcohol resin, polyvinyl chloride resin, ionomer resin, polyamide resin, acrylonitrile/butadiene/styrene copolymer resin (ABS) and polycarbonate resin. Among these resins, at least one selected from the group consisting of polypropylene resin, composite polypropylene resin and acrylonitrile/butadiene/styrene copolymer resin (ABS) is preferred.

The molded body may include a component other than the resin, as necessary. Examples of the component other than the resin include additives such as an inorganic filler, a rubber and carbon black, and a component derived from a foaming agent as described later. When the molded body includes a component other than the resin, the total content thereof is preferably 15% by mass or less, more preferably 10% by mass or less, further preferably 5% by mass or less, of the entire molded body.

When the molded body includes a component other than the resin, the total content of the resin is preferably 85% by mass or more, more preferably 90% by mass or more, further preferably 95% by mass or more, of the entire molded body.

The purpose of the molded body of the present disclosure is not particularly limited. Since the molded body of the present disclosure is light in weight and excellent in strength, the molded body is suitably used for the purpose in which each of being light in weight and strong is important, such as inner and exterior components of automobiles. Specific examples of the inner and exterior components of automobiles include sacco moldings, arch moldings, side moldings, rocker moldings, bumpers, and back door trims.

### <Automotive Component>

The automotive component of the present disclosure includes the molded body as mentioned above.

The type of the automotive component is not particularly limited, and may be selected from inner and exterior components of automobiles, such as sacco moldings, arch moldings, side moldings, rocker moldings, bumpers, and back door trims.

### <Method of Producing Molded Body>

The method for producing the molded body according to the present disclosure is a method for producing the molded body as mentioned above, the method including:
a process of supplying, to a space between a mold at an outer surface side of the molded body and a mold at an inner surface side of the molded body, a composition that includes a resin and a foaming agent; and
a process of moving the mold at the inner surface side in a direction away from the mold at the outer surface side, wherein:
   the mold at the inner surface side has a movable portion at a region that includes the opening and the periphery; and
   the movable portion is projected, as the mold at the inner surface side is moved, in an opposite direction from a direction of moving the mold at the inner surface side.

In the foregoing method, after supplying the composition, the volume of the space in which the composition has been supplied is increased by moving the mold at the inner surface side in a direction away from the mold at the outer surface side. At this time, the composition is caused to foam by the action of the foaming agent included in the composition, thereby forming a foamed layer.

In the foregoing method, the mold at the inner surface side has a movable portion at a position corresponding to the opening and its periphery of the molded body. When the mold at the inner surface side is moved, the movable portion is caused to protrude in an opposite direction from a direction of moving the mold. Therefore, even when the distance between the mold at the inner surface side and the mold at the outer surface side is increased, the movable portion remains at the same position as before moving the mold at the inner surface side. As a result, while a foamed layer is formed at a portion at which the distance between the mold at the inner surface side and the mold at the outer surface side has been increased (i.e., at an outer side of the periphery of the opening), a foamed layer is not formed or the formation thereof is suppressed at a position at which the movable portion faces the mold at the outer surface side (i.e., the periphery of the opening).

In the foregoing method, the distance of projection of the movable portion at the inner surface side is preferably equal to the distance of movement of the mold at the inner surface side in a direction away from the mold at the outer surface side. However, depending on the capability of controlling the movable portion, the distance of projection of the movable portion at the inner surface side may be different from the distance of movement of the mold at the inner surface side in a direction away from the mold at the outer surface side. In this case, from the viewpoint of suppressing the formation of a foamed layer at the periphery of the opening, the distance of projection of the movable portion at the inner surface side is preferably 85% or more, more preferably 90% or more, further preferably 95% or more, with respect to the distance of movement of the mold at the inner surface side in a direction away from the mold at the outer surface side.

An example of the method for producing the molded body of the present disclosure is explained by referring to the drawings.

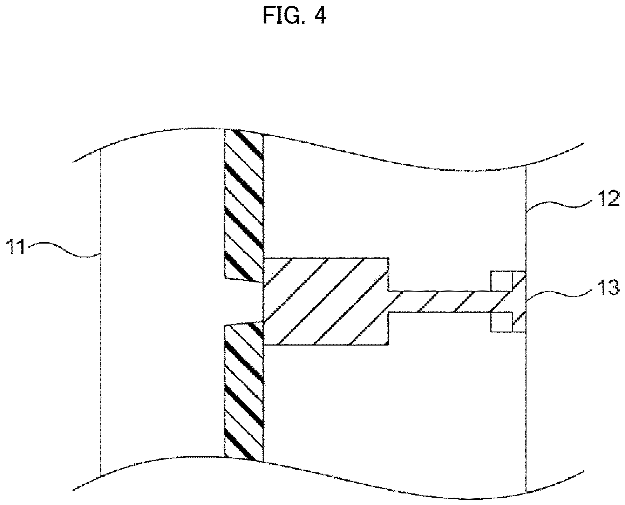

FIG. 4 is a sectional view schematically illustrating an exemplary method for producing the molded body, showing a state in which a composition including a resin and a foaming agent is supplied to a space between the mold 11 at the outer surface side of the molded body and the mold 12 at the inner surface side of the molded body.

The mold 11 at the outer surface side has a projection at a position corresponding to the opening of the molded body.

The mold 12 at the inner surface side has a movable portion 13 at a position corresponding to a region including the opening of the molded body and the periphery of the opening.

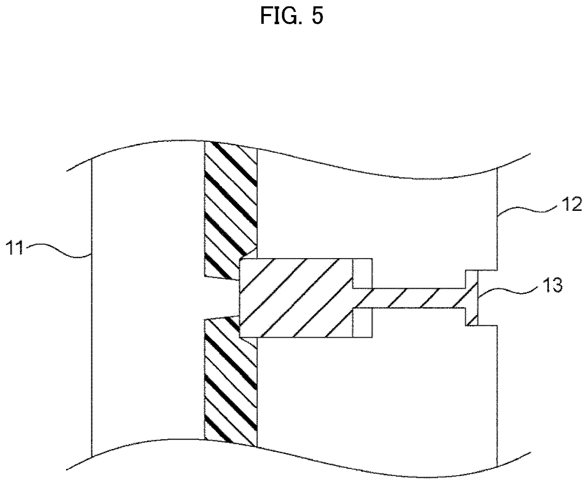

FIG. 5 shows a state in which the mold 12 at the inner surface side is moved in a direction away from the mold 11 at the outer surface side (core back) when the composition has been supplied to the space between the mold 11 at the outer surface side and the mold 12 at the inner surface side.

By moving the mold 12 at the inner surface side in a direction away from the mold 11 at the outer surface side, the volume of the space to which the composition has been supplied is increased, and a foamed layer is formed by causing the composition to foam.

The movable portion 13 provided at the mold 12 at the inner surface side is caused to protrude in an opposite direction from a direction of movement of the mold 12 at the inner surface side, and the mold 12 at the inner surface side remains at the same position as before moving the mold 12 at the inner surface side. Therefore, a foamed layer is not formed, or formation of the foamed layer is suppressed, at a portion between the movable portion 13 and the mold 11 at the inner surface side.

The method for causing the movable portion 13 to protrude is not particularly limited, and a known means such as springs or hydraulics may be used.

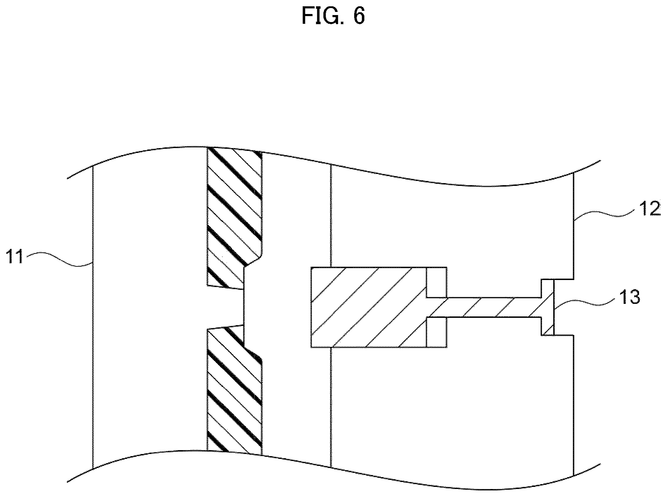

FIG. 6 shows a state in which the mold 12 at the inner surface side and the movable portion 13 are moved in a direction away from the molded body, which is a solidified product of the composition. Thereafter, the molded body is removed from the mold 11 at the outer surface side, and the process of producing the molded body is completed.

The foamed portion of the molded body produced by the method of the present disclosure is preferably in a state in which the foamed layer is disposed between skin layers that are disposed at the outer surface side and the inner surface side.

The state in which the skin layers are disposed at the outer surface side and the inner surface side can be obtained by adjusting the temperature of a portion of the mold that contacts the composition. Specifically, by controlling the temperature of the mold such that the composition supplied to a space between the molds begins to solidify at a portion of the composition in contact with a surface of the mold, ahead of the other portions of the composition, a skin layer is formed at a portion of the composition near the mold during the core back, while a foamed layer is formed at the other portions of the composition by foaming.

In the method of the present disclosure, the type of the resin included in the composition is not particularly limited, and may be selected from the resins as mentioned above that may be included in the molded body.

The type of the foaming agent included in the composition is not particularly limited, and either an organic foamed agent or an inorganic foamed agent may be used.

Specific examples of the organic foaming agent include azodicarbonamide (ADCA), N,N-dinitrosopentamethylenetetramine (DPT), 4,4-oxybisbenzenesulfonylhydrazide (OBSH) and hydrazodicarbonamide (HDCA). Specific examples of the inorganic foaming agent include sodium hydrogen carbonate.

Among the organic foaming agents, when the molded body is an exterior component, azodicarbonamide (ADCA) is preferably used.

By using azodicarbonamide (ADCA), hot water resistance or the like is improved and occurrence of blisters in the hot water test tends to be suppressed. The blister refers to a state in which the skin layer is pushed up by gas generated by reaction between the unreacted foamed agent and water.

In the foregoing method, the temperature of the composition to be supplied to the molding apparatus is not particularly limited. When the composition includes a thermoplastic resin, the temperature is preferably equal to or higher than the softening point of the thermoplastic resin.

## Claims

1. A molded body, comprising an outer surface and an inner surface, and a foamed portion that includes a foamed layer,
the foamed portion having an opening that penetrates from the outer surface to the inner surface, wherein:
a periphery of the opening does not include the foamed layer; or
a thickness of the foamed layer at the periphery is smaller than a thickness of the foamed layer at an outer side of the periphery.

2. The molded body according to claim 1, wherein the inner surface at the periphery is parallel to the outer surface at the periphery.

3. The molded body according to claim 1 or claim 2, wherein an area of the opening at the outer surface is greater than an area of the opening at the inner surface.

4. The molded body according to any one of claim 1 to claim 3, wherein the foamed portion is in a state in which the foamed layer is disposed between a skin layer disposed at an outer surface side and a skin layer disposed at an inner surface side.

5. An automotive component, comprising the molded body according to any one of claim 1 to claim 4.

6. A method for producing the molded body according to any one of claim 1 to claim 4, the method comprising:
a process of supplying, to a space between a mold at an outer surface side of the molded body and a mold at an inner surface side of the molded body, a composition that includes a resin and a foaming agent; and
a process of moving the mold at the inner surface side in a direction away from the mold at the outer surface side, wherein:
the mold at the inner surface side has a movable portion at a region that includes the opening and the periphery; and
the movable portion is projected, as the mold at the inner surface side is moved, in an opposite direction from a direction of moving the mold at the inner surface side.
